# FASCICULE DE BREVET EUROPEEN

(11) **EP 3 227 744 B1**
(45) Date de publication et mention de la délivrance du brevet: **06.10.2021**
(21) Numéro de dépôt: 15812882.7
(22) Date de dépôt: 04.12.2015
(51) Int. Cl.: G02B 27/01

(54) **AFFICHEUR TÊTE-HAUTE À GÉNÉRATEUR LATÉRAL**
HEAD-UP-ANZEIGE MIT SEITENGENERATOR
HEAD-UP DISPLAY WITH SIDE GENERATOR

(30) Priorité: 05.12.2014 FR 1402783
(43) Date de publication de la demande: 11.10.2017
(73) Titulaire: Valeo Comfort and Driving Assistance, 94046 Créteil Cedex (FR)
(72) Inventeur: MERMILLOD, Pierre, 94046 Créteil CEDEX (FR); GRANDCLERC, François, 94046 Créteil CEDEX (FR)
(74) Mandataire: Delplanque, Arnaud
(86) Numéro de dépôt international: PCT/FR2015/053337
(87) Numéro de publication internationale: WO 2016/087804

(56) Documents cités:
- JP-A- H11 337 861
- JP-A- 2009 196 473
- JP-A- 2010 191 404
- JP-A- 2011 143 800
- US-A- 5 563 620
- US-A- 5 572 342
- US-A1- 2011 134 498
- US-A1- 2011 235 185
- US-A1- 2012 176 683
- US-A1- 2012 200 476

## Description

La présente invention concerne un afficheur tête-haute à générateur d'image latéral, notamment pour véhicule automobile.

Les afficheurs tête-haute ont généralement pour fonction de superposer des informations d'aide au pilotage, à la navigation ou à la réalisation de la mission, dans le champ de vision d'un pilote d'aéronef par exemple. Il permet ainsi au pilote de surveiller son environnement en même temps que de lire des informations fournies par ses instruments de bord. Aujourd'hui, ces afficheurs sont également utilisés dans l'automobile.

De tels afficheurs comprennent un générateur d'image et un élément optique semi-réfléchissant configuré pour former une image virtuelle de l'image du générateur. L'image virtuelle est superposée à l'environnement dans le champ de vision du conducteur ou du pilote. Il est également possible d'utiliser le pare-brise du véhicule comme élément optique semi-réfléchissant pour former l'image virtuelle. Les caractéristiques techniques d'un tel afficheur se rapportent notamment à la position de l'élément optique par rapport à la route et au conducteur, ainsi qu'à l'angle d'incidence de l'image sur l'élément optique, afin notamment d'éviter les problèmes de distorsion. US 5 572 342 A divulgue un afficheur à tête haute avec deux miroirs et un hologramme réflecteur.

Les générateurs d'image connus dans l'automobile, comprennent une ou plusieurs sources de lumière et une matrice de pixellisation qui reçoit le faisceau lumineux des sources. La matrice transmet ou réfléchit le faisceau lumineux en imprimant une image qui est formée grâce aux pixels. Chaque pixel est commandé individuellement, et peut soit avoir une position dite « ouverte », dans laquelle la lumière incidente participe à l'image, soit une position dite « fermée », dans laquelle la lumière incidente ne participe pas à l'image affichée. Ainsi, en fonction des pixels ouverts, on compose une image. On peut également utiliser un balayage laser comme moyen de formation d'images.

Il existe différents types de matrices, notamment les matrices de transistors de type TFT (pour « Thin Film Transistor » en anglais, qui signifie transistors en couches minces), qui fonctionnent en transmission de lumière, c'est-à-dire que le faisceau lumineux des sources traverse la matrice qui est agencée entre la source de lumière et l'élément optique. On connait aussi les matrices de type LCOS (pour « Liquid Crystal on Silicone » en anglais, qui signifie cristaux liquides sur silicium), et les matrices de micro-miroirs de type DMD (pour « Digital Micro-Mirror Device» en anglais, qui signifie dispositif digital à micro-miroirs), qui fonctionnent par réflexion du faisceau lumineux vers l'élément optique.

Pour simplifier, l'afficheur est agencé dans le véhicule de la façon suivante : le générateur d'images est disposé dans la planche de bord avec un miroir qui réfléchit l'image vers l'élément optique semi-réfléchissant. L'élément optique est agencé sur la planche de bord au niveau du pare-brise de manière à être dans les champs de vision du conducteur.

L'afficheur est agencé de manière à ce que l'image soit présentée sensiblement face à l'élément optique. Autrement dit, l'image est affichée ou réfléchie sensiblement dans l'axe de la surface de réflexion de l'élément optique. En outre, le générateur d'image doit être disposé à une distance minimale de l'élément optique pour que l'image virtuelle soit de dimension suffisante, sachant, d'une part que la taille des matrices est limitée, et d'autre part que l'image virtuelle doit apparaître à environ deux mètres du conducteur. Cet agencement de l'afficheur prend donc un espace assez important dans l'épaisseur de la planche de bord.

Or, certains véhicules ont des planches de bord qui ne permettent pas d'intégrer un tel afficheur. En effet, les camions par exemple ont des contraintes réglementaires de dimension, notamment en longueur, qui ont pour conséquence de restreindre les dimensions des cabines, ce qui oblige la conception de planches de bord ayant une épaisseur réduite par rapport aux planches de bord de voitures de tourisme. Par conséquent, les afficheurs de conduite et de confort d'une telle cabine sont conçus spécifiquement pour une planche de bord limité, qui ne peut recevoir en plus un afficheur tête haute de ce type.

L'invention vise donc à obtenir un afficheur tête haute dont l'agencement et les dimensions sont compatibles avec des planches de bord à épaisseur réduite.

Pour cela, l'invention concerne un afficheur tête haute à générateur d'image latéral selon la revendication 1.

L'afficheur est remarquable en ce que la surface d'affichage du générateur d'image est sensiblement parallèle à un plan défini par l'axe optique de projection et l'axe optique de réflexion.

Ainsi, grâce à cet afficheur, le générateur d'image n'est pas disposé dans l'axe de l'élément optique, mais latéralement sur le côté. L'afficheur est donc peu profond, ce qui permet de l'insérer dans des planches de bord peu épais, ou qui sont déjà saturés en nombre d'éléments électroniques ou mécaniques, comme par exemple dans les cabines de camions.

En outre, on évite ainsi de devoir concevoir des afficheurs complexes de miroirs qui renvoient l'image dans l'axe de l'élément optique, avec les inconvénients de perte de qualité d'image et d'énergie.

Selon différents modes de réalisation de l'invention, qui pourront être pris ensemble ou séparément :
- le générateur d'image, l'élément optique et le miroir sont agencés de sorte que le plan du miroir est sensiblement à 45° de la surface d'affichage,
- l'élément optique présente un angle d'inclinaison par rapport à l'axe de réflexion du miroir,
- le miroir et l'élément optique sont agencés de manière à ce que l'axe de réflexion soit orienté sensiblement vers le centre de l'élément optique,
- le générateur d'image comprend au moins une source de lumière apte à émettre un faisceau lumineux, et une matrice de pixellisation configurée pour afficher l'image à partir du faisceau lumineux,
- l'élément optique est une lame semi-réfléchissante,
   - l'élément optique est au moins une partie d'un pare-brise de véhicule,
   - l'élément optique présente une courbure de manière à porter au moins en partie la puissance optique nécessaire à la formation de l'image virtuelle,
   - l'élément optique est plan,
   - le miroir présente une courbure de manière à porter au moins en partie la puissance optique nécessaire à la formation de l'image virtuelle,
   - le miroir est plan.

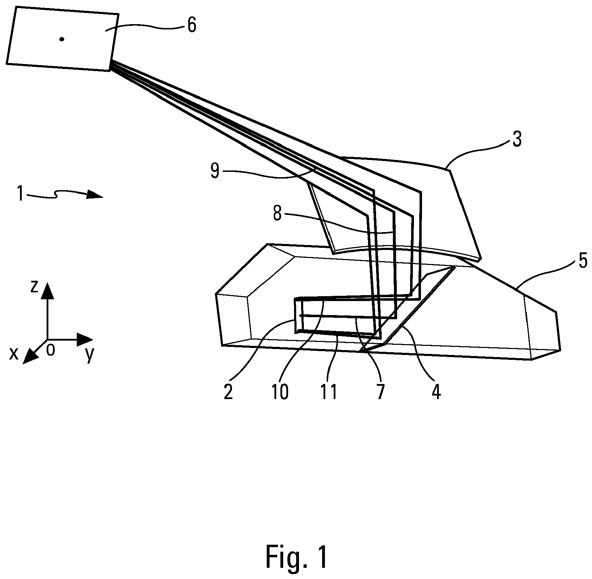

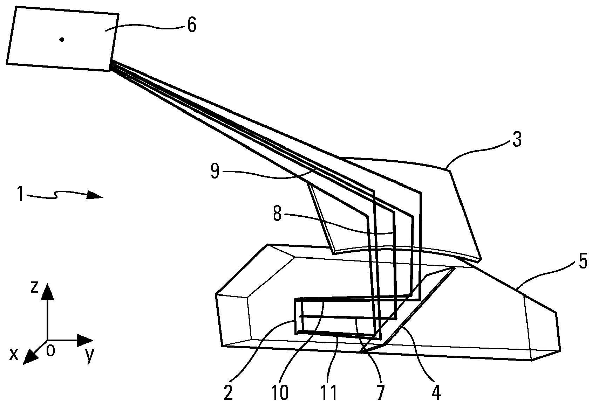

L'invention sera mieux comprise à la lumière de la description suivante qui n'est donnée qu'à titre indicatif et qui n'a pas pour but de la limiter, accompagnée du dessin joint de la figure 1, illustrant de façon schématique, une vue en perspective d'un mode de réalisation d'un afficheur selon l'invention.

La figure 1 représente un afficheur tête-haute 1, par exemple d'un véhicule automobile, dans un repère orthonormé (O, x, y, z) où (Ox) et (Oy) sont des axes horizontaux et (Oz) est un axe vertical. L'afficheur 1 est agencé au moins en partie dans un boîtier ou module 5, et comprend un générateur d'image 2, agencé latéralement et configuré pour afficher une image sur une surface d'affichage dans le plan (xOz). On entend par « latéral » le fait que le générateur d'image 2 est disposé de côté par rapport aux autres éléments de l'afficheur, il n'est donc pas dans l'axe comme dans un afficheur classique. Le générateur d'image 2 comprend au moins une source de lumière apte à émettre un faisceau lumineux, et une matrice de pixellisation configurée pour former une image à partir du faisceau lumineux. Non représentées, les sources de lumière sont par exemple des diodes électroluminescentes, qui sont disposées dans une partie du générateur. Le générateur 2 comporte la matrice de pixellisation, par exemple de type TFT, sur une face de sortie du générateur 2. Ainsi, les diodes émettent un faisceau vers la matrice qui imprime une image en transmission sur une face du générateur d'image 2.

L'image est affichée parallèlement au plan (xOz) selon un axe optique d'affichage 7 parallèle à (Oy). Autrement dit, l'image est sensiblement centrée autour de l'axe optique d'affichage 7, qui est ici sensiblement horizontal. L'afficheur 1 comprend également un élément optique 3 semi-réfléchissant agencé à distance du générateur d'image 2 et configuré pour faire apparaître une image virtuelle de l'image du générateur 2.

Ici, l'élément optique 3 est une lame semi-réfléchissante agencée sur le module 5, et qui peut être de préférence repliée sur le module 5 dans une position de rangement, ou relevée dans une position d'utilisation.

L'élément optique 3 semi-réfléchissant permet à un observateur à la fois de voir l'image virtuelle qui se forme par réflexion, et de voir à travers l'élément optique 3. Ainsi, pour un observateur qui se trouve d'un côté de l'élément optique 3, l'image virtuelle est superposée dans son champ de vision à l'environnement vu à travers l'élément optique 3. L'image virtuelle apparaît à une certaine distance de l'élément optique 3 et donc de l'observateur. L'image virtuelle est en outre sensiblement centrée autour d'un axe optique de projection 9 qui passe par le centre de l'élément optique 3. L'axe optique de projection 9 est parallèle au plan (xOz), l'élément optique 3 semi-réfléchissant pouvant avoir différentes inclinaisons, ce qui modifie la direction de l'axe optique de projection 9 dans un même plan.

Le générateur d'image 2 est configuré pour former une image sensiblement rectangulaire. L'image est formée par le générateur d'image 2 de sorte que le grand côté de l'image est sensiblement perpendiculaire à l'axe optique de projection 9 de l'image virtuelle. Le grand côté de l'image est parallèle à l'axe (Oz), donc vertical ici. Pour cela, la matrice de pixellisation est rectangulaire, et le générateur d'image 2 est positionné de manière à ce que le grand côté de la matrice de pixellisation soit perpendiculaire à l'axe optique de projection 9 de l'image virtuelle. Autrement dit, la surface d'affichage du générateur 2 est en position verticale pour avoir une image verticale. Cette position du générateur 2 permet en outre à l'afficheur 1 de gagner en compacité selon l'axe (Ox).

L'afficheur 1 est en outre agencé pour que l'axe optique d'affichage 7 du générateur d'image 2 soit perpendiculaire à l'axe optique de projection 9 de l'image virtuelle.

A cette fin, le générateur d'image 2 est disposé latéralement à distance de l'élément optique 3 et un miroir 4 est agencé sensiblement en-dessous de l'élément optique 3, sur l'axe d'affichage 7 de l'image, de manière à être sur son chemin optique. Ainsi, le miroir 4 réfléchit l'image affichée par le générateur d'image 2 vers l'élément optique 3 qui est au-dessus, selon un axe optique de réflexion 8, qui est parallèle à (Oz), et donc vertical ici. Sur la figure le générateur d'image 2 est représenté à gauche du miroir, mais il pourrait également être à droite.

Selon l'invention, la surface d'affichage du générateur d'image 2 est sensiblement parallèle à un plan défini par l'axe optique de projection 9 et l'axe optique de réflexion 8. Ces deux plans sont donc parallèles au plan (xOz).

Le miroir 4 et l'élément optique 3 sont agencés de manière à ce que l'élément optique 3 présente un angle d'inclinaison par rapport à l'axe de réflexion 8 du miroir 4, et que l'axe optique de réflexion 8 soit orienté sensiblement vers le centre de l'élément optique 3, afin de minimiser les problèmes de distorsion.

Le générateur d'image 2 est de préférence disposé à même hauteur que le miroir 4, et le miroir 4 est orienté de sorte que l'axe optique d'affichage 7 de l'image soit perpendiculaire à l'axe optique de réflexion 8 du miroir 4. Autrement dit, le générateur 2, le miroir 4 et l'élément optique 3 sont sensiblement disposés aux trois coins d'un triangle rectangle parallèle au plan (yOz), le miroir 4 étant agencé à l'angle droit. Le plan du miroir 4 est donc sensiblement à 45° de la surface d'affichage du générateur 2.

Les axes optiques d'affichage 7 et de réflexion forment les deux côtés perpendiculaires du triangle rectangle. Dans cette configuration, l'image affichée verticalement, est réfléchie par le miroir 4 vers l'élément optique 3, de sorte qu'elle est tournée de 90° après réflexion vers l'élément optique 3. Le grand côté de l'image est alors parallèle à l'axe (Oy). Autrement dit, le grand côté de l'image rectangulaire devient horizontal après réflexion sur le miroir 4. Ainsi, l'image virtuelle apparait également horizontale.

On a représenté sur la figure 1 les rayons représentant le trajet optique des quatre coins de l'image dans l'afficheur 1 afin d'illustrer la rotation de l'image à 90°. Les deux paires 10, 11 de rayons des coins des deux petits côtés de l'image sont parallèles horizontalement à la sortie du générateur d'image 2, puis deviennent parallèles verticalement après réflexion sur le miroir 4. Ainsi, l'image qui était verticale est devenue horizontale. En outre, l'image virtuelle formée par l'élément optique 3 est elle aussi sensiblement horizontale.

Comme le montre la figure 1, l'image virtuelle formée par l'élément optique 3 est visible par un observateur dans une fenêtre 6. Autrement dit, pour observer l'image à travers l'élément optique 3, l'observateur doit être placé de manière à avoir ses yeux dans cette fenêtre 6, dite « boîte à œil ». La fenêtre est sensiblement centrée sur l'axe optique de projection 9.

Dans un autre mode de réalisation de l'afficheur, qui est utilisé dans un véhicule, une partie du pare-brise sert d'élément optique semi-réfléchissant. A cette fin le reste de l'afficheur est agencé dans la planche de bord de manière à pouvoir utiliser le pare-brise comme élément otique semi-réfléchissant.

En outre, au moins un des éléments de l'afficheur 1 est configuré pour porter une puissance optique afin de faire apparaître l'image virtuelle à une certaine distance de l'élément optique 3 et avec un grandissement spécifique. Elle est ainsi superposée convenablement à l'environnement apparaissant dans le champ de vision de l'observateur. La puissance optique est une caractéristique physique, qui détermine la capacité d'un système optique à faire converger ou diverger la lumière. Elle est égale au rapport entre l'angle sous lequel l'œil voit l'image en sortie du système et la taille de l'objet.

Dans une première variante de réalisation, représentée sur la figure 1, le miroir 4 est plan et l'élément optique 3 présente une courbure qui porte la puissance optique.

Dans une deuxième variante de réalisation, non représentée sur la figure, c'est le miroir 4 qui est courbé et l'élément optique 3 plan.

Dans une troisième variante de réalisation, non représentée, l'élément optique 3 et le miroir 4 présentent chacun des courbures de manière à porter en partie la puissance optique de façon complémentaire.

## Revendications

1. Afficheur (1) tête haute à générateur d'image (2) latéral, notamment pour véhicule automobile, comportant :
- un générateur d'image (2) configuré pour afficher une image sur une surface d'affichage selon un axe optique d'affichage (7),
- un élément optique (3) semi-réfléchissant agencé à distance du générateur d'image (2) et configuré pour faire apparaître une image virtuelle de l'image selon un axe optique de projection (9), et
- un miroir (4) agencé de manière à réfléchir l'image du générateur d'image (2) vers l'élément optique (3) selon un axe optique de réflexion (8),
la surface d'affichage du générateur d'image (2) étant sensiblement parallèle à un plan défini par l'axe optique de projection (9) et l'axe optique de réflexion (8), le générateur d'image (2) étant configuré pour former une image sensiblement rectangulaire, dont le grand côté est sensiblement parallèle à l'axe optique de réflexion (8), et dans lequel lequel le miroir (4) est agencé sur l'axe optique d'affichage (7) **caractérisé en ce que** le nombre de miroir le long du trajet optique de l'image depuis le générateur d'image (2) jusqu'à l'élément optique (3) est limité au seul miroir (4).

2. Afficheur selon l'une quelconque des revendications précédentes, **caractérisé en ce que** le générateur d'image (2), l'élément optique (3) et le miroir (4) sont agencés de sorte que le plan du miroir (4) est sensiblement à 45° de la surface d'affichage.

3. Afficheur selon l'une quelconque des revendications précédentes, **caractérisé en ce que** l'élément optique (3) présente un angle d'inclinaison par rapport à l'axe de réflexion (8) du miroir.

4. Afficheur selon l'une quelconque des revendications précédentes, **caractérisé en ce que** le miroir (4) et l'élément optique (3) sont agencés de manière à ce que l'axe de réflexion (8) soit orienté sensiblement vers le centre de l'élément optique (3).

5. Afficheur selon l'une quelconque des revendications précédentes, **caractérisé en ce que** le générateur d'image (2) comprend au moins une source de lumière apte à émettre un faisceau lumineux, et une matrice de pixellisation configurée pour afficher l'image à partir du faisceau lumineux.

6. Afficheur selon l'une quelconque des revendications précédentes, **caractérisé en ce que** l'élément optique (3) est une lame semiréfléchissante.

7. Afficheur selon l'une quelconque des revendications 1 à 5, **caractérisé en ce que** l'élément optique (3) est au moins une partie d'un pare-brise de véhicule.

8. Afficheur selon l'une quelconque des revendications précédentes, **caractérisé en ce que** l'élément optique (3) présente une courbure de manière à porter au moins en partie la puissance optique nécessaire à la formation de l'image virtuelle.

9. Afficheur selon l'une quelconque des revendications 1 à 7, **caractérisé en ce que** l'élément optique (3) est plan.

10. Afficheur selon l'une quelconque des revendications précédentes, **caractérisé en ce que** le miroir (4) présente une courbure de manière à porter au moins en partie la puissance optique nécessaire à la formation de l'image virtuelle.

11. Afficheur selon l'une quelconque des revendications 1 à 9, **caractérisé en ce que** le miroir (4) est plan.

## Patentansprüche

1. Head-up-Anzeige (1) mit Seitenbildgenerator (2), insbesondere für ein Kraftfahrzeug, aufweisend:
- einen Bildgenerator (2) der dazu ausgebildet ist, ein Bild auf einer Anzeigefläche gemäß einer optischen Anzeigeachse (7) anzuzeigen,
- ein halbreflektierendes optisches Element (3), das vom Bildgenerator (2) entfernt angeordnet ist und dazu ausgebildet ist, ein virtuelles Bild des Bilds gemäß einer optischen Projektionsachse (9) erscheinen zu lassen, und
- einen Spiegel (4), der so angeordnet ist, dass er das Bild des Bildgenerators (2) zum optischen Element (3) gemäß einer optischen Reflexionsachse (8) reflektiert, wobei die Anzeigefläche des Bildgenerators (2) im Wesentlichen parallel zu einer Ebene verläuft, die von der optischen Projektionsachse (9) und der optischen Reflexionsachse (8) definiert ist, wobei der Bildgenerator (2) dazu ausgebildet ist, ein im Wesentlichen rechteckiges Bild zu bilden, dessen lange Seite im Wesentlichen parallel zur optischen Reflexionsachse (8) verläuft, und wobei wobei der Spiegel (4) auf der optischen Anzeigeachse (7) angeordnet ist, **dadurch gekennzeichnet, dass** die Spiegelanzahl entlang des optischen Wegs des Bilds vom Bildgenerator (2) bis zum optischen Element (3) auf den einzelnen Spiegel (4) begrenzt ist.

2. Anzeige nach einem der vorhergehenden Ansprüche, **dadurch gekennzeichnet, dass** der Bildgenerator (2), das optische Element (3) und der Spiegel (4) so angeordnet sind, dass die Ebene des Spiegels (4) im Wesentlichen 45° zur Anzeigefläche verläuft.

3. Anzeige nach einem der vorhergehenden Ansprüche, **dadurch gekennzeichnet, dass** das optische Element (3) einen Neigungswinkel bezogen auf die Reflexionsachse (8) des Spiegels aufweist.

4. Anzeige nach einem der vorhergehenden Ansprüche, **dadurch gekennzeichnet, dass** der Spiegel (4) und das optische Element (3) so angeordnet sind, dass die Reflexionsachse (8) im Wesentlichen zur Mitte des optischen Elements (3) orientiert ist.

5. Anzeige nach einem der vorhergehenden Ansprüche, **dadurch gekennzeichnet, dass** der Bildgenerator (2) mindestens eine Lichtquelle, die geeignet ist, ein Lichtbündel abzugeben, und eine Pixelierungsmatrix, die dazu ausgebildet ist, das Bild auf Basis des Lichtbündels anzuzeigen, umfasst.

6. Anzeige nach einem der vorhergehenden Ansprüche, **dadurch gekennzeichnet, dass** das optische Element (3) ein halbreflektierendes Blatt ist.

7. Anzeige nach einem der Ansprüche 1 bis 5, **dadurch gekennzeichnet, dass** das optische Element (3) wenigstens ein Abschnitt einer Fahrzeugwindschutzscheibe ist.

8. Anzeige nach einem der vorhergehenden Ansprüche, **dadurch gekennzeichnet, dass** das optische Element (3) eine Krümmung aufweist, so dass es wenigstens teilweise die optische Leistung trägt, die zur Bildung des virtuellen Bilds notwendig ist.

9. Anzeige nach einem der Ansprüche 1 bis 7, **dadurch gekennzeichnet, dass** das optische Element (3) eben ist.

10. Anzeige nach einem der vorhergehenden Ansprüche, **dadurch gekennzeichnet, dass** der Spiegel (4) eine Krümmung aufweist, so dass er wenigstens teilweise die optische Leistung trägt, die zur Bildung des virtuellen Bilds notwendig ist.

11. Anzeige nach einem der Ansprüche 1 bis 9, **dadurch gekennzeichnet, dass** der Spiegel (4) eben ist.

## Claims

1. Head-up display (1) with a side image generator (2), notably for a motor vehicle, comprising:
- an image generator (2) configured to display an image on a display surface along an optical axis of display (7),
- a semi-reflective optical element (3) arranged at a distance from the image generator (2) and configured to cause a virtual image of the image to appear along an optical axis of projection (9), and
- a mirror (4) arranged so as to reflect the image from the image generator (2) toward the optical element (3) along an optical axis of reflection (8),
the display surface of the image generator (2) being substantially parallel to a plane defined by the optical axis of projection (9) and the optical axis of reflection (8), the image generator (2) being configured to form a substantially rectangular image, the longer side of which is substantially parallel to the optical axis of reflection (8), and in which the mirror (4) is arranged on the optical axis of display (7),
**characterized in that** the number of mirrors along the optical path of the image from the image generator (2) to the optical element (3) is limited to the single mirror (4) .

2. Display according to any of the preceding claims, **characterized in that** the image generator (2), the optical element (3) and the mirror (4) are arranged in such a way that the plane of the mirror (4) is substantially at 45° to the display surface.

3. Display according to any of the preceding claims, **characterized in that** the optical element (3) lies at an angle of inclination relative to the axis of reflection (8) of the mirror.

4. Display according to any of the preceding claims, **characterized in that** the mirror (4) and the optical element (3) are arranged in such a way that the axis of reflection (8) is oriented substantially toward the centre of the optical element (3).

5. Display according to any of the preceding claims, **characterized in that** the image generator (2) comprises at least one light source capable of emitting a light beam, and a pixel matrix configured to display the image on the basis of the light beam.

6. Display according to any of the preceding claims, **characterized in that** the optical element (3) is a semi-reflective plate.

7. Display according to any of claims 1 to 5, **characterized in that** the optical element (3) is at least one portion of a vehicle windscreen.

8. Display according to any of the preceding claims, **characterized in that** the optical element (3) has a curvature such that it provides at least some of the optical power required to form the virtual image.

9. Display according to any of claims 1 to 7, **characterized in that** the optical element (3) is plane.

10. Display according to any of the preceding claims, **characterized in that** the mirror (4) has a curvature such that it provides at least some of the optical power required to form the virtual image.

11. Display according to any of claims 1 to 9, **characterized in that** the mirror (4) is plane.
